Europäisches Patentamt

(19) European Patent Office

Office européen des brevets

(11) **EP 0 585 340 B1**

(12) **EUROPEAN PATENT SPECIFICATION**

(45) Date of publication and mention
of the grant of the patent:
**10.07.1996 Bulletin 1996/28**

(21) Application number: **92911751.3**

(22) Date of filing: **13.05.1992**

(51) Int. Cl.$^6$: **B44C 5/04**, C08L 23/08

(86) International application number:
**PCT/US92/03872**

(87) International publication number:
**WO 92/20534 (26.11.1992 Gazette 1992/29)**

(54) **FLEXIBLE AND CONFORMABLE IONOMERIC RESIN BASED FILMS**

FLEXIBLE, ANPASSUNGSFÄHIGE FOLIEN AUF BASIS IONOMERISCHEN HARZES

FEUILLES SOUPLES ET CONFORMABLES A BASE DE RESINE IONOMERE

(84) Designated Contracting States:
**BE CH DE ES FR GB IT LI SE**

(30) Priority: **17.05.1991 US 702065**
**17.05.1991 US 702605**

(43) Date of publication of application:
**09.03.1994 Bulletin 1994/10**

(73) Proprietor: **MINNESOTA MINING AND
MANUFACTURING COMPANY
St. Paul, Minnesota 55133-3427 (US)**

(72) Inventors:
• **KAUSS, Del, A.
Saint Paul, MN 55133-3427 (US)**

• **HAGER, Patrick, J.
Saint Paul, MN 55133-3427 (US)**
• **KELLER, Janet, T.
Saint Paul, MN 55133-3427 (US)**

(74) Representative: **Baillie, Iain Cameron et al
c/o Ladas & Parry
52-54 High Holborn
London WC1V 6RR (GB)**

(56) References cited:
EP-A- 0 371 635          EP-A- 0 382 849
US-A- 3 691 140          US-A- 4 900 604

• M. ASH ET. AL. 'CHEMICAL PRODUCTS DESK
REFERENCE' 1990 , EDWARD ARNOLD,
LONDON GB

EP 0 585 340 B1

**Description**

Field of the Invention

This invention relates to films made from modified ionomeric resins. More particularly, this invention relates to flexible and conformable films made from modified ionomeric resins, and to a wall decorating system having self-adherent appliques which press onto a backing or substrate sheet or to substrates such as walls, doors or furniture to create a flexible, decorative scene that is easily changed by repositioning the appliques on the backing or substrate sheet in a repositionable manner.

Background

Polyvinyl chloride (PVC) film has been used in film form for numerous applications, such as adhesive tapes, automotive pinstripes, dust covers and the like. A specific application of PVC film is in decorative borders and appliques as described in U.S. Patent No. 4,900,604 to Martinez et al. PVC resin has to be highly plasticized to give it flexibility for these uses. The PVC is processed by premixing in plasticizers and stabilizers, then sheeting out the film in a calendering operation. When the film is laminated onto a liner, the film is held in a stretched conformation that is only released when the film is removed from the liner. In later use, the film may additionally be stretched during application. After time passes, the film "remembers" its relaxed state and shrinks. This is especially a problem in adhesive composite structures, such as adhesive tape or decorative borders or appliques. In such applications, the shrinking of the film causes a shear stress in the adhesive layer. When this happens, the product may fall off the substrate.

Ionomeric resins (such as the Surlyn™ family of resins, commercially available from E. I. DuPont de Nemours Co.) have been mainly exploited as a tough covering for sporting equipment such as golf balls, and as a heat-shrinkable plastic wrap component. In some cases, the cold temperature properties of ionomers have proved useful, as in U.S. Patent No. 4,161,562. Ethylene-co-methacrylic acid copolymers have been blended, as in U.S. Patent Nos. 3,445,546 and 3,869,422, and more recently U.S. Patent No. 4,916,025. In the latter patent, Surlyn™ material was used only as a heat sealing outer layer, optionally blended with other resins to reduce cost. Given the recommended uses for Surlyn™ resins, one would not expect the filled material to act as a stand-alone conformable film.

U.S. Patent No. 4,279,344 describes a peelable, heat-sealable packaging laminate. The inner sealing layer is formed from polypropylene or polyethylene/polypropylene copolymer blended with 15-35% Surlyn™ ionomer. The heat-sealed Surlyn™ film bonds are described as hand peelable.

U.S. Patent No. 4,835,025 describes a barrier laminate for essential oils/flavorings composed of paper substrate coated with nylon, which is coated with Surlyn™ resin and a coating of olefin (polyethylene) overall. The intermediate nylon or Surlyn™ film layer may be pigmented using a pigment such as $TiO_2$ at 0.5-15%.

U.S. Patent No. 4,653,752 describes a sport ball comprised of a plastic shell covered with a sewn cover. The shell is a blend of Surlyn™ resin with 25-50% ethylene-co-vinyl acetate (EVA). The Surlyn™ resin is described as providing strength and durability, while the EVA provides softness. These properties are noted for bulk-like materials such as spherical balls. Increasing EVA content leads to more rubbery, softer materials, while increasing Surlyn™ resin levels leads to harder, more resilient materials. With respect to additives, small amounts of other plastic polymers may be added without changing the characteristics significantly, and glass may be added as well.

There are many types of prior art wall decorating systems such as paint and/or wallpapering. Both paint and wallpaper, however, are permanent and are not reusable. To significantly change the appearance of a painted or wallpapered wall, the wall typically is repainted or wallpapered with a different wallpaper or paint. Such processes are generally expensive and time consuming. Additionally, paint is messy to apply and wallpaper is difficult to install.

U.S. Patent 4,900,604 to Martinez et al. (the entire contents of which are herein incorporated by reference) is directed to adhesive wall decorating systems previously sold under the name "Decorate-It!"™ Room Decorating System. That system comprises substrate or "backing" sheets and a plurality of pre-cut self adherent appliques. The backing sheets and appliques are coated with a repositionable adhesive to afford rearrangement of the appearance of a wall or other surface by changing the relative positions of the backing sheet and appliques.

The appliques and backing sheets described in Martinez et al. were constructed from a thin film or sheet of flexible material, such as plasticized polyvinyl chloride (PVC) based material. The film should be conformable to adjust to irregularities and discontinuities in substrates such as light switch frames along wall surfaces or irregularly textured surfaces.

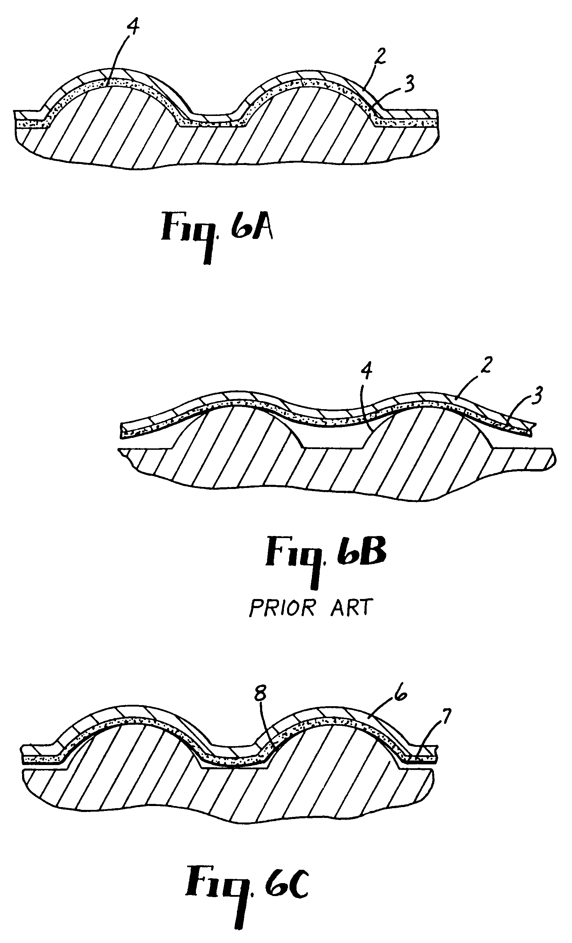

Conformance as discussed in this case has two basic elements. First, the film must be capable of initially modifying its shape so that it will accommodate irregular surfaces over which it is stretched. Figure 6A illustrates a thin film 2 having an adhesive 3 coated over one side that adheres the film 2 to an irregular substrate or surface 4, such as a wallpapered or painted wall. Initially, PVC films are highly conformable and may conform to an irregular surface.

The ability of a film to initially conform over an irregular surface can be measured by evaluating the hysteresis of the film. Hysteresis is a measurement of the energy lost or dissipated during cyclic deformation of a film sample. The greater the amount of energy lost (hysteresis), the more conformable the film. While PVC films exhibit excellent initial hysteresis properties, they suffer other drawbacks as will be illustrated below. Unfilled ionomeric polymer-based films generally have unacceptably low hysteresis values. Because they do not provide good initial conformance to irregular surfaces, unfilled ionomeric-polymer films are not desirable.

The second important element to conformance as described herein is the Long-Term Elastic Recovery of the film. Long-Term Elastic Recovery is discussed below in the detailed description of the preferred embodiment. Polyvinyl chloride (PVC) films used to construct the appliques and backing sheets described in Martinez et al. are highly plasticized to give them flexibility for use as appliques and backing sheets. The PVC is typically processed by premixing in plasticizers and stabilizers, then sheeting out the film in a calendering operation. When the film is laminated to a liner, the film is held in a stretched conformation that is only released when the film is removed from the liner. In later use, such as when the backing sheets or appliques are applied to a wall or other surface, the film may be additionally manually stretched. After time passes, the film "remembers" its relaxed state; and the film typically shrinks or contracts, particularly at elevated temperatures.

Figure 6B illustrates the relationship between a substrate 4 and an adhesive coated PVC film 2 after time has passed. The film 2 remembered its relaxed state and shrank or contracted. Shrinkage of the polyvinyl chloride (PVC) based appliques and backing sheets contributes to adhesive shear failure resulting in separation between the appliques, backing sheets and the substrate (e.g. the backing sheet or applique falling off the wall). This phenomenon is illustrated in Figure 6B which shows reduced contact between the adhesive 3 and the irregular surface 4. The reduced surface area of adhesive 3 and surface 4 in contact results in increased stress in the adhesive layer 3 that tends to result in the film 2 and adhesive 3 separating from the surface 4 (e.g. the applique or backing sheet falling off the wall).

Additionally, over time, plasticizers or other additives for polyvinyl chloride (PVC) based materials tend to migrate or leach from the bulk material resulting in a general degeneration of mechanical properties such as embrittlement and reduced flexibility. Also, polyvinyl chloride (PVC) based materials generally release chlorinated by-products during combustion.

## Disclosure of the Invention

We have found that ionomeric polymer resins having a melt flow index of greater than 10 are flexible and conform to irregular surfaces when produced in film form having a thickness of between about 0.050 and 0.127 mm, when the ionomeric polymer resin is mixed with a filler that is not an ionomeric polymer. The films of this invention further exhibit superior long-term stability (both thermal and dimensional) in use. A preferred application of these films is for adhesive composites, such as adhesive tapes or wall decorating substrate films. Adhesive composites tend to graphically illustrate the superior nature of the present films in long-term dimensional stability, because the present films tend to remain in place once applied to uneven or textured surfaces such as painted walls. In addition, the films of this invention contain no migrating plasticizers or other leachable additives.

The present invention may also be described as an improved adhesive wall decorating system which utilizes an improved flexible and conformable ionomeric resin-based sheet material to construct the appliques and backing sheets. The improved material used to construct the appliques and backing sheets is adapted to receive indicia or graphics on one side and a repositionable adhesive on the other side, and provides a sheet which exhibits improved characteristics such as long-term dimensional stability, shrinkage resistance and other mechanical properties, which exhibits reduced long-term dimensional sensitivity to elevated temperatures and increased long-term resistance to thermal distortion, which is free of volatile/migrating additives or plasticizers that eventually lead to a reduction in mechanical properties such as embrittlement, which is recyclable, which is free of chlorinated by-products when incinerated, and which reduces the likelihood of adhesive shear failure for the adhesive used to attach the appliques and backing sheets to a substrate or another surface.

The appliques and backing sheets of the present invention are constructed from ionomeric polymer resins having a melt flow index of greater than 10. Such films are flexible and conform to irregular surfaces (e.g. such as painted or wallpapered walls, particularly textured surface walls) when produced in film form having a thickness of between about 0.050 and 0.127 mm, when the ionomeric polymer resin is mixed with a filler that is not an ionomeric polymer. The films used in conjunction with the invention further exhibit superior long-term stability (both thermal and dimensional) in use. The appliques and backing sheets of the present invention tend to remain in place once applied to uneven or textured surfaces such as painted or wallpapered walls. In addition, the films of this invention contain no migrating plasticizers or other leachable additives, and can be conveniently and efficiently disposed of.

## Brief Description of the Drawing

The present invention will be further described with reference to the accompanying drawing wherein like reference numerals refer to like parts in the several views, and wherein:

FIG. 1 is a perspective environmental view of an adhesive wall decorating system of the present invention, illustrated as applied on two walls in a child's bedroom;

FIG. 2 is an enlarged cross-sectional view taken approximately along line 2 - 2 of FIG. 1, illustrating a first applique in overlapping relation with a wall, and a second applique which overlaps the first and the backing sheet;

FIG. 3 is an enlarged front elevational view of an applique and the backing sheet;

FIG. 4 is a cross-sectional view taken approximately along line 4 - 4 of FIG. 3, illustrating adherence of the backing sheet to a painted wall;

FIG. 5 is a cross-sectional view similar to FIG. 4, illustrating adherence of the backing sheet to a wallpapered wall;

FIG. 6A is a sectional view, which is not to scale, of an adhesive coated thin film just after it is initially manually pressed against an irregular surface,

FIG. 6B is a sectional view similar to FIG. 6A of an adhesive coated PVC based thin film after it has been manually pressed against an irregular surface and after a great deal of time has passed;

FIG. 6C is a sectional view similar to FIG. 6A of an adhesive coated thin film used to construct an applique or backing sheet of the present invention after it is initially pressed against an irregular surface and after a great deal of time has passed;

FIG. 7 is a graph comparing the elastic recovery over time of an inventive film with a PVC film; and

FIG. 8 is a closer view of the initial portion of the recovery curve shown in Fig. 7.

## DETAILED DESCRIPTION OF THE PREFERRED EMBODIMENT

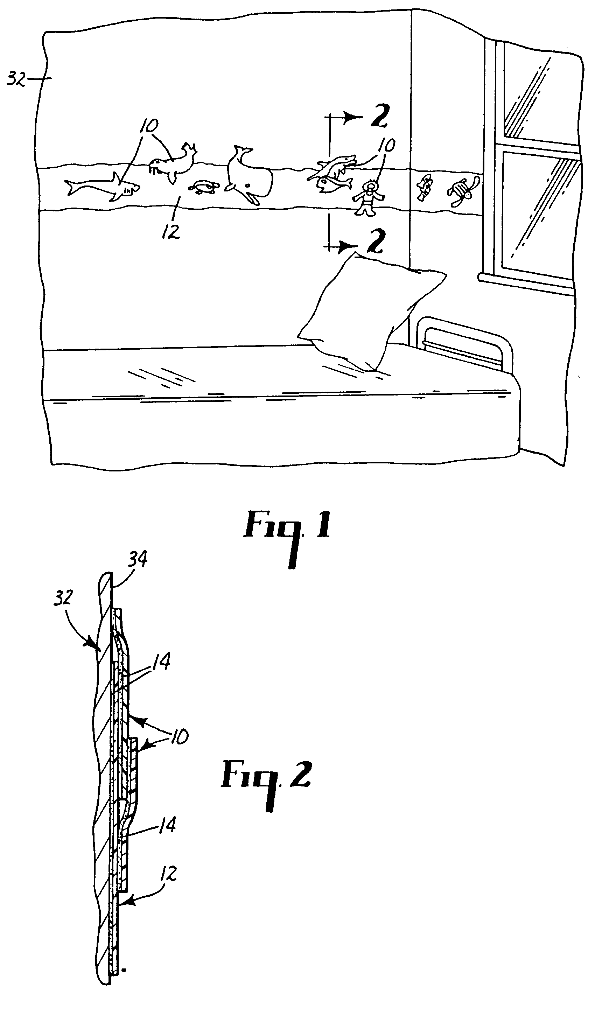

Referring now to FIG. 1 of the drawing, there is shown an improved versatile adhesive wall decorating system according to one aspect of the present invention. The wall decorating system has at least one and preferably a plurality of self-adherent appliques 10 which can be attached to one or more substrate or "backing" sheets 12 by a reusable, self-contained, non-permanent or "repositionable" adhesive that affords repositioning of the appliques 10 after installation. The appliques 10 provide complementary decorative images which cooperate with one another and with the backing sheets 12 to create a thematic decorative scene that can be easily rearranged.

In one aspect, the present invention provides an improved decorating system that affords a relatively inexpensive alternative to decorating solely with paint and/or wallpaper, both of which are relatively permanent once applied. In contradistinction, the improved decorating system remains removable or rearrangeable once in place and is not as messy, time consuming or difficult to apply as paint and wallpaper. The decorating system's use of a repositionable adhesive 14 beneficially ensures that the system can be installed quickly and efficiently without marring walls or damaging painted surfaces. Moreover, the usage of a repositionable adhesive 14 allows decorative components of the system to be removably attached to an underlying surface without requiring pins, tacks, or similar sharp attachment means. The decorating system is particularly suitable for use in a youngster's room where it will spark the child's creative development by enabling the child to express his or her imagination by rearranging the decorative appliques into various decorative scenes.

The repositionable and easily changeable nature of the invention beneficially allows different appliques to be used as a child grows and changes interests. For example, the scene illustrated in the drawings can be replaced by airplane or sports related appliques so that the wall decorating system retains its appeal over the years. The wall decorating system can also be updated throughout the year by utilizing appliques relating to holidays or to the four seasons.

In accordance with the present invention, the appliques 10 and backing sheets 12 comprise relatively thin films having a repositionable pressure sensitive adhesive coating 14 on one side (FIGS. 2, 4 and 5).

According to another aspect of the present invention, there is provided a novel film. The films comprise:

a) about 60-98% by weight ionomeric polymer resin that is a copolymer of ethylene and acrylic acid or methacrylic acid neutralized by a metal cation and having a melt flow index greater than about 10, and

b) about 2-40% by weight of a filler material that is not an ionomeric polymer, wherein the film has a thickness of between 0.050 and 0.127 mm.

These films provide significant property advantages in thermal and dimensional stability and may also exhibit superior aging and decreased embrittlement characteristics as compared to the standard PVC films used to construct the PVC films described in U.S. Patent 4,900,604 to Martinez et al. and previously sold under the name "Decorate-It!"™ Room Decorating System. These advantageous properties are available even though the ionomeric resin-based films need not contain volatile or migrating additives or plasticizers. Films as described herein are comparatively benign from an environmental standpoint, because they produce no chlorinated by-products from combustion. This is an additional advantage when the decorating system is used in residential and other habitable interior uses, where it is desirable to reduce the amount of harmful chemicals released in the event of a fire.

Ionomeric resin-based films as described herein also are more simple to make than PVC films, because the number and degree of premixing of ingredients is drastically reduced in making the conformable film. Because there are thermally reversable crosslinks in the ionomeric polymer, these films may be more readily recycled than other films currently commercially available.

The ionomeric polymers used to construct the appliques and the backing sheets 12 of the present invention or alternatively, the ionomeric polymers used to construct the films of the present invention are copolymers of ethylene with acrylic acid or methacrylic acid, neutralized with a metal cation such as zinc, sodium, or magnesium. The particularly preferred ionomeric polymers are copolymers of ethylene with methacrylic acid. The ionomeric polymers effective for use in this invention have a melt flow index of at least about 10. Preferably, the ionomeric polymer has a melt flow index of at least about 12. Melt flow index is determined by following the recognized and well-known protocol set forth in ASTM D 1238. E. I. DuPont de Nemours Co. produces a line of neutralized ethylene-co-methacrylic acid ionomeric polymers under the name Surlyn™ that are acceptable for the present use, provided that the selected resin has the requisite melt flow index. A particularly preferred resin is Surlyn™ 1702 resin, which has a high melt flow index (14.0), a low flexural modulus (152 N/mm$^2$), and good low temperature flexibility.

A small amount of filler material is necessary to endow ionomer-based films with the required conformable and inelastic properties required in a film product. The typical range of filler material content is from about 5-40% by weight. Preferably the filler material content is about 5-25% by weight, and more preferably about 5-15%.

The filler material may be selected from any material that is distinct in nature from the ionomeric polymer, thus providing the desired flexoral and conformance properties. In its most general sense, the filler may be any material appropriate for mixing in a polymeric resin to be made into a film that is not an ionomeric polymer. More specifically, the filler may be selected from non-reinforcing fillers such as mineral fillers, glass bubbles and the like, or may be selected from polymeric resins. This filler material is preferably selected from pigments, such as $TiO_2$. Often such pigments are provided in a polymeric resin carrier, which is appropriately included as a part of the filler material mass for measurement purposes.

Divergent polymeric materials may also be used as the filler material itself, such as ethylene polymers, polypropylene polymers (PP), polyoxyethylene copolymers (PEO), ethylene-co-acrylic acid (EAA), ethylene-co-methacrylic acid (EMAA), ethylene-co-vinyl acetate (EVA), polypropylene containing 12-18% of ethylene propylene rubber, and the like. Other examples of filler materials are synthetic waxes or mineral oil. Particularly preferred waxes include the ACLYN™ line of low molecular weight ionomeric waxes from Allied Signal, Inc. The ancillary properties of the ultimate film that is formed will be dependent on the nature of the filler material component that is added to the ionomeric resin. For example, when the filler material is a resin that typically forms an elastomeric material, the resulting film of the present invention will tend to be more rubbery in nature and even more tear resistant than the ionomeric film without additive. Films made with a less elastomeric filler, such as polypropylene, tend to be stiffer.

Because the filler materials are selected from different types of substances, it is envisioned that differing compatibilities and propensities of the filler to dominate the physical properties of the ultimate film will be observed. Ideal ranges of filler content may be different from one filler to another.

The appliques 10 and the backing sheets 12 or the "films" of the present invention are typically provided at thicknesses of between about 0.050 and 0.127 mm thick. Appliques 10 and backing sheets 12 or "films" that are thinner than about 0.050 mm are difficult to handle and do not have significant tear strength advantage over less expensive alternatives. Appliques 10 and backing sheets 12 or "films" thicker than about 0.127 mm are not very conformable, and therefore do not provide this advantageous property. Additionally, all other characteristics being the same, appliques 10 and backing sheets 12 thicker than about 0.127 mm are less conformable than thinner films which tends to reduce adhesive contact, reducing bond strength. This tends to result in failure of the decorating system (eg. the appliques 10 or backing sheets 12 falling off the substrate). Preferably, appliques 10 and backing sheets 12 are provided in thicknesses of between about 0.064 to 0.104 mm, and more preferably between about 0.076 to 0.089 mm.

Films according to the present invention and films used to fabricate the appliques 10 and backing sheets 12 of the present invention are made by merely dry mixing pellets of ionomeric resin and pellets of pigment, or other selected filler material. The thus dry-blended materials are melted and mixed in a single screw extruder, then die cast to form the final film. The film may optionally be laminated to a carrier web, such as a glossy or matte-finish polyester carrier film, for ease of handling and coating. The caliper control of the extrusion cast film is typically better than for a calendered material.

The ionomeric resin-based films described herein are useful to replace the appliques 10 and backing sheets 12 that were previously constructed from plasticized PVC-based materials. In general, the ionomeric resin-based films described herein are useful in applications typically satisfied by highly plasticized PVC-based materials. Particularly advantageous characteristics of the ionomeric resin-based films are as adhesive composites, where later shrinking of the film can result in adhesive failure when the composite backing (meaning the film) no longer corresponds to the dimension of the substrate to which the composite is adhered. Such adhesive composites include those containing pressure-sensitive adhesive generally considered to be permanent and composites intended to be repositionable in nature. Other adhesive composites include those containing a hot melt adhesive which would be considered to be a permanent application of the film.

Examples of adhesive composites intended to be permanently fixed include tapes, such as electrical tapes, the so-called "vinyl tapes," and the repair tapes such as PVC pipe repair tape. A separate class of tapes that may be constructed using ionomeric resin-based backings are the pavement marking tapes. Ionomeric resin-based conformable films are envisioned to be useful in such applications both as a topcoat and a substrate layer. Yet another class of tapes that may benefit from an ionomeric resin-based backing is the automotive striping and decal applications.

Examples of adhesive composites intended to be repositionably fixed primarily include graphics-related materials. These materials include large decorative posters for application to a wall. Also contemplated are graphics displays for commercial vehicles that are initially repositionable during application to the vehicle and then become permanently affixed, or such graphics that continue to be removable during the display life of the product.

In embodiments where the adhesive applied to the film is repositionable, the adhesive may be selected from any adhesive that may be repeatedly adhered to and removed from a substrate without substantial loss of adhesion capability. An example of such an adhesive is disclosed in U.S. Patent No. 3,691,140 to Silver, which relates to solid tacky microspheres. Repositionable adhesives are also known in which microspheres contained in the adhesive are non-tacky. A disclosure of this type of adhesive is provided in US Pat. No. 4,735,837 to Miyasaka. Repositionability may also be achieved by other techniques, such as pattern coating of the adhesive.

Preferably, the repositionable adhesive provided on the film comprises between about 60-100% by weight of hollow, polymeric, acrylate, inherently tacky, infusible, solvent-insoluble, solvent-dispersible, elastomeric pressure-sensitive adhesive microspheres having a diameter of at least 1 micrometer, and between about 0-40% by weight of a non-spherical polyacrylate adhesive. These hollow microspheres are made in accordance with the teaching of European Patent Application 371,635. The non-spherical polyacrylate adhesive may be any conventional pressure-sensitive adhesive. Examples of such adhesives are polymers made from the "soft" monomers such as n-butyl acrylate, isooctyl acrylate, or the like, or copolymers made from a soft component, such as isobutylene, n-butyl acrylate, isooctyl acrylate, ethyl hexyl acrylate, or the like; and a polar monomer such as acrylic acid, acrylonitrile, acrylamide, methacrylic acid, methyl methacrylate or the like. Non-spherical polyacrylate adhesives are commercially available, for example, as the Rohm and Haas Rhoplex™ line of adhesives. Preferably, the non-spherical polyacrylate adhesive is present in the repositionable adhesive at an amount of about 10-35% by weight.

Figure 6C is a sectional view similar to FIG. 6A of an adhesive 7 coated on a thin film 6 used to construct an applique 10 or backing sheet 14 of the present invention after it is initially pressed against an irregular surface 8 and after a great deal of time has passed. In contrast to the prior art shown in Figure 6B, the thin film used to construct the backing sheets 12 and appliques 10 reduce the shrinkage of the film and thereby reduce the likelihood of adhesive failure over time. A comparison of Figures 6B and 6C illustrates that, over time, the thin film 6 used to construct an applique 10 or backing sheet 14 retain a greature surface area of adhesive 7 in contact with the surface 8 than the prior art PVC films 2.

Referring now to Figures 2, 4 and 5, the adhesive 14 coated to the appliques 10 and backing sheets 12 may be selected from any adhesive that may be repeatedly adhered to and removed form a substrate without substantial loss of adhesion capability. An example of such an adhesive 14 is disclosed in US Patent No. 3,691,140 to Silver, which relates to solid tacky microspheres. Repositionable adhesives are also known in which microspheres contained in the adhesive are non-tacky. A disclosure of this type of adhesive is provided in US Pat. No. 4,735,837 to Miyasaka. Repositionability may also be achieved by other techniques, such as pattern coating of the adhesive. Preferably, the repositionable adhesive 14 provided on the film comprises between about 60-100% by weight of hollow, polymeric, acrylate, inherently tacky, infusible, solvent-insoluble, solvent-dispersible, elastomeric pressure-sensitive adhesive microspheres having a diameter of at least 1 micrometer, and between about 0-40% by weight of a non-spherical polyacrylate adhesive. These hollow microspheres are made in accordance with the teaching of European Patent Application 371,635. The non-spherical polyacrylate adhesive may be any conventional pressure-sensitive adhesive. Examples of such adhesives are polymers made from the "soft" monomers such as n-butyl acrylate, isooctyl acrylate, or the like, or copolymers made from a soft component, such as isobutylene, n-butyl acrylate, isooctyl acrylate, ethyl hexyl acrylate, or the like; and a polar monomer such as acrylic acid, acrylonitrile, acrylamide, methacrylic acid, methyl methacrylate or the like. Non-spherical polyacrylate adhesives are commercially available, for example, as the Rohm and Haas Rhoplex™ line of adhesives. Preferably, the non-spherical polyacrylate adhesive is present in the repositionable adhesive at an amount of about 10-35% by weight.

While other repositionable adhesives are generally effective to support films as presently described, the repositionable adhesive comprising hollow microspheres are particularly effective for holding large samples of film (e.g. backing sheets 12 with a length of approximately fifteen feet, a width of about nine inches, and a thickness of between approximately 0.050 and 0.127 mm) vertical surfaces. This increased holding power is particularly required where the film to be supported has a surface area exceeding about 0.3 square meters. When the repositionable adhesive 14 additionally comprises a non-spherical polyacrylate adhesive, improved anchorage of the total adhesive to the film is observed, resulting in less adhesive residue being left on the substrate after removal. Also, repositionable adhesives comprising non-spherical polyacrylate adhesives exhibit excellent shear adhesion properties, even for highly textured vertical surfaces. These advantageous adhesive properties are obtained without excessive adhesion to substrates such as painted walls that would result in peeling of the paint off of the wall when the film adhesive composite is removed. Improved anchorage, shear and adhesion properties are also observed for this adhesive when used with other film backings, such as polyvinyl chloride film backings.

The adhesive 14 may alternatively be permanent in nature. Additionally the adhesive 14 may also comprise other adhesive composites including those containing a hot melt adhesive, which would be considered to be a permanent application of the appliques 10 and backing sheets 12.

The films used to construct the appliques and backing sheets 12 of the present invention provide particular advantage in excellent tear strength and conformability. Tear strength is evaluated using standard test methods to determine the Elmendorf tear strength. Thus, while samples of polyvinyl chloride films typically used on the market may exhibit an Elmendorf tear strength in the range of 50 to 200 grams/ply, ionomeric-based films have an Elmendorf tear strength in excess of 280 grams/ply, and preferably greater than 300 grams/ply. The Elmendorf tear strength measurements noted above are taken on 0.076 mm films in the machine direction.

Conformance as discussed herein has two basic elements. First, the film must be capable of initially modifying its shape so that it will accommodate irregular surfaces over which it is stretched. The ability of a film to initially conform over an irregular surface can be measured by evaluating the hysteresis of the film. Hysteresis is a measurement of the energy lost or dissipated when a film sample is stretched and immediately released in a cyclic deformation. The greater the amount of energy lost (hysteresis), the more conformable the film. While PVC films exhibit excellent hysteresis properties, they suffer other drawbacks as will be illustrated below. Unfilled ionomeric polymer-based films have unacceptably low hysteresis values. Because they do not provide good initial conformance to irregular surfaces, unfilled ionomeric-polymer films do not satisfy requirements of the desired conformable films.

The second important element to conformance as desired herein is the Long-Term Elastic Recovery of the film.

Long-Term Elastic Recovery is determined by providing a sample of the resin in a 50.8 mm x 1.27 mm by 0.1016 mm film sample. The sample is placed in a tensile tester and stretched 100% in length at a rate of 508 mm/minute. The sample is allowed to remain in the jaws of the tensile tester for 5 minutes or for 10 minutes to equilibrate, then removed and placed in a temperature and humidity controlled chamber at 25°C and 50% relative humidity. The Long-Term Elastic Recovery is calculated by the following equation:

$$100 - [ \, (\frac{Y \text{-} X}{Z \text{-} X}) \times 100 \, ] = \% \text{ recovery}$$

where

X = unstrained length
Z = initial strained length

and

Y = length of sample at some later time "t."

Long-Term Elastic Recovery is evaluated by taking periodic measurements over a 40 hour time period after imposing an initial known strain. Preferably, the film will exhibit a Long Term Elastic Recovery of no more than 80% after 40 hours when the film os 0.1 mm thick and initially held for 5 minutes. Similarly, the film should exhibit no more than 20% recovery after 40 hours when initially held for 10 minutes.

Ionomeric polymer-based films were surprisingly found to recover almost instantaneously from an imposed deformation to a limiting degree, followed over a long time span with almost no additional recovery. This behavior is beneficial for a wall decorating substrate film (such as the film used to fabricate the appliques 10 and backing sheets 12), where one desires the film to be mechanically stable and resist shrinkage which may lead to failure, as in the case of plasticized PVC sheets.

Mechanically, plasticized PVC has excellent initial conformance to irregular surfaces, springing back only slightly less than or equal to 40% for PVC Comparative Example A below, over the initial few minutes of application. However, over longer time spans (1 hour -several days) or at elevated temperatures, PVC suffers considerable creep and elastic recovery which lead to failure by pop-off or lift. Conversely, ionomer-based films according used in the present invention, although rebounding initially to a greater extent (about 50-60%) than PVC, exhibit greatly reduced long-term dimensional changes in comparison. Thus, ionomer-based films according to the present invention, once properly applied, show better stability and conformance than PVC films.

The following examples are presented for illustrational purposes only, and are not intended to limit the scope of the invention.

Example 1:

86 parts of dry pellets of Surlyn™ 1702 resin from DuPont were mixed with 14 parts of Ampacet™ 11748 pigment, a TiO$_2$ white pigment concentrate in linear low density polyethylene commercially available from Ampecet Corporation. The thus dry-blended materials were melted and mixed in a single screw extruder, then cast to form a 0.076 mm. film on a matte-finish polyester carrier web.

Examples 2-7:

A resin blend is prepared as described in Example 1, and is die cast onto a matte-finish carrier web in varying thicknesses as follows:

| | |
|---|---|
| Example 2 | 0.050 mm |
| Example 3 | 0.064 mm |
| Example 4 | 0.081 mm |
| Example 5 | 0.089 mm |
| Example 6 | 0.102 mm |
| Example 7 | 0.127 mm |

Examples 8-20:

Resin blends were prepared as described in Example 1, and were cast onto a matte-finish carrier web at a film thickness of 0.076 mm, according to the following material ratios:

| Example | Surlyn™ 1702 | PP[1] | AMPACET 11748[2] |
|---|---|---|---|
| 8 | 69 | 17 | 14 |
| 9 | 52 | 34 | 14 |
| 10 | 34 | 52 | 14 |
| 11 | 86 | - | 14 |
| Example | Surlyn™ 1706 | | AMPACET 11748 |
| 12 | 86 | | 14 |
| Example | Surlyn™ 9020 | PP | AMPACET 11748 |
| 13 | 69 | 17 | 14 |
| 14 | 86 | - | 14 |
| Example | Surlyn™ 1702 | ULDPE[3] | AMPACET 11748 |
| 15 | 67.5 | 22.5 | 10 |
| Example | Surlyn™ 1702 | LDPE[4] | AMPACET 11748 |
| 16 | 45 | 45 | 10 |
| 17 | 67.5 | 22.5 | 10 |
| Example | Surlyn™ 1702 | EAA[5] | AMPACET 11748 |
| 18 | 52 | 34 | 14 |
| Example | Surlyn™ 1702 | EMAA[6] | AMPACET 11748 |
| 19 | 52 | 34 | 14 |
| Example | Surlyn™ 1702 | EVA[7] | AMPACET 11748 |
| 20 | 52 | 34 | 14 |

[1] PP is polypropylene.
[2] AMPACET 11748 is a mixture of 70% $TiO_2$/30% Linear Low Density Polyethylene.
[3] ULDPE is ultra low density polyethylene.
[4] LDPE is low density polyethylene.
[5] EAA is ethylene acetic acid.
[6] EMAA is ethylene methacrylic acid.
[7] EVA is ethylene vinyl acetate.

Comparative Example A:

Manufacture of flexible, plasticized PVC film

A flexible plasticized PVC film corresponding to the PVC backing used in 3M Cat. No. 231 adhesive tape was provided at a thickness of 0.076 mm. This PVC film was selected as representative of PVC films used for this type of application.

Comparative Example B:

An unfilled Surlyn™ 1702 resin was extruded without previously mixing with any component to a caliper of 0.102 mm.

STABILITY OF ELASTIC RECOVERY FROM DEFORMATION

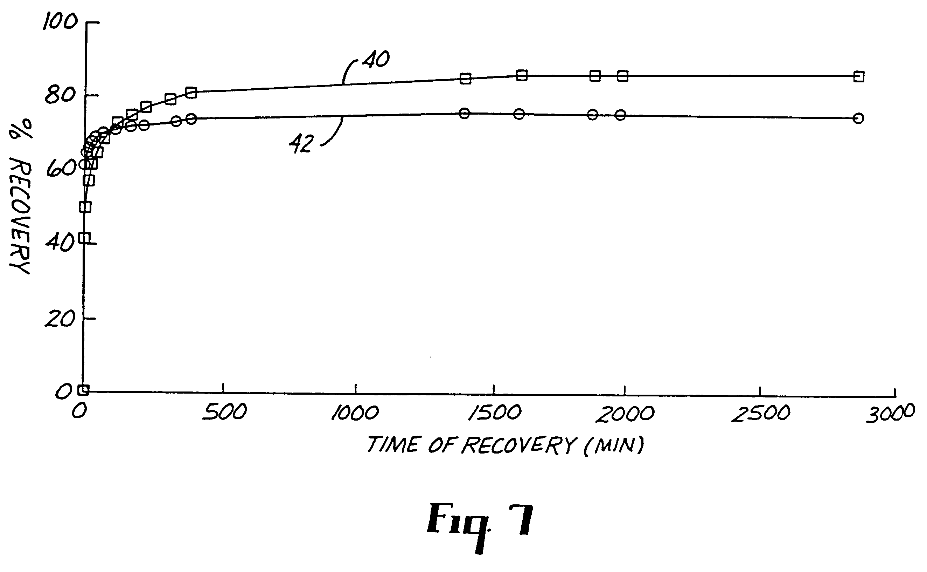

Table I shows the elastic recovery of films over time for the films of Example 1 and Comparative Example A where the sample is held at 100% elongation for 5 minutes. These elastic recovery measurements are graphically presented in Fig. 7. Comparative Example A Elastic Recovery **40** is the elastic recovery curve of the PVC film prepared according to Comparative Example A over time. Example 1 Elastic Recovery **42** is the elastic recovery curve of the filled Surlyn™ resin prepared according to Example 1 over time.

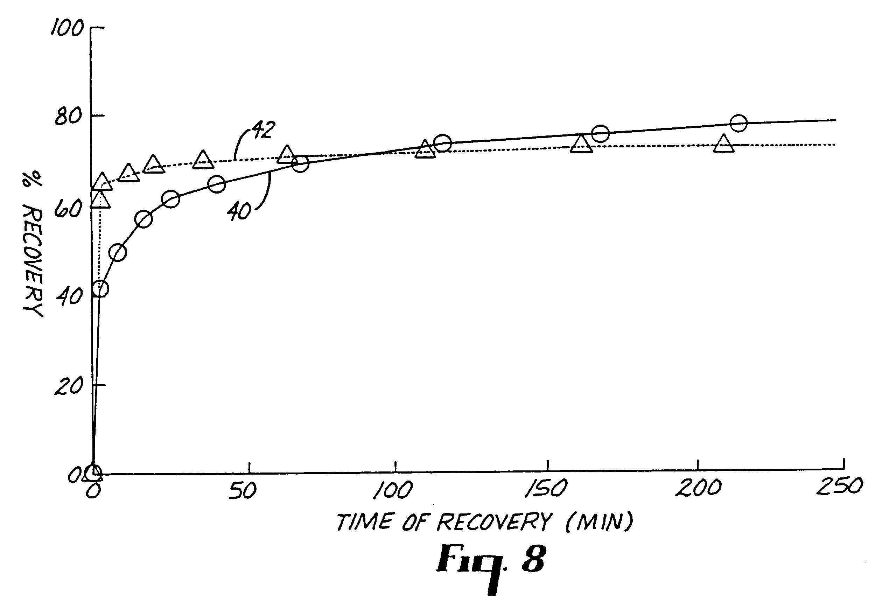

Fig. 8 shows a closer view of the graph of Fig. 7, so that the initial portion of the recovery curve is more clearly shown. While initially the film of Example 1 recovers faster, after about 90 minutes the film of Comparative Example A begins to recover more from the initial stretching.

From initial identical deformations (100%), Comparative Example A attains an equilibrium recovery of 87.5%, while Example 1 attains an equilibrium recovery of 75.9%. Although Comparative Example A initially does not recover as much (41.7% vs. 61.1%) as Example 1, Comparative Example A recovers at a faster rate (about 0.1%/min vs. 0.03%/min) and to a greater final extent. This greater recovery causes failure of adhesive composite products by creating stress in the adhesive layer, causing the adhesive to fail.

TABLE I

| Elastic Recovery of Films | | |
|---|---|---|
| Time (min) | % R Comparative Example A | % R Example 1 |
| 2 | 41.7 | 61.1 |
| 8 | 50.0 | 64.8 |
| 17 | 57.3 | 66.7 |
| 26 | 61.5 | 68.5 |
| 41 | 64.6 | 69.4 |
| 69 | 68.8 | 70.4 |
| 118 | 72.9 | 71.3 |
| 169 | 75.0 | 72.2 |
| 216 | 77.1 | 72.2 |
| 313 | 79.2 | 73.2 |
| 386 | 81.3 | 74.1 |
| 1400 | 85.4 | 75.9 |
| 1600 | 86.5 | 75.9 |
| 1878 | 86.5 | 75.9 |
| 1986 | 86.6 | 75.9 |
| 2850 | 87.5 | 75.9 |

In applications where an adhesive composite is adhered to a surface, it is believed that Long-Term Elastic Recovery is more closely predicted by initially holding the sample in the extended state for a longer term. This is because in actual use in adhesive composites, the film is held in its extended state on the substrate by the adhesive.

After initial extension of the 50.8 mm x 12.7 mm x 0.105 mm sample film 100% in length at a rate of 508 mm/minute, the samples are held in the strained state for 10 minutes and then allowed to recover to equilibrium. The films of Example 1 and Comparative Example B were found to reach equilibrium by about 90 hours. The film of Comparative Example A at that time was still recovering slightly. Comparative Example B had the least amount of recovery under this test, about 6.67%, but is not very conformable as shown below. The film of Example 1 recovered only about 10.81%. The film of Comparative Example A recovered about 64.47%.

In the hysteresis test, a film sample 50.8 mm x 12.7 mm x .102 mm is clamped in a tensile testing machine. The sample is strained to a known final elongation (either 5% or 25%, which corresponds to 53.3 mm and 63.5 mm, respectively) at a rate of 305 mm/min. and immediately returned to zero elongation. The stress/strain curves in the sense of increasing and decreasing elongation then describe a hysteresis loop, and the area between these ascending and descending stress/strain curves is equal to the energy loss per deformation cycle, or the hysteresis.

In Table II, the hysteresis properties of Surlyn™ 1702 films of varying thicknesses are compared to plasticized PVC. The PVC has greater hysteresis (the energy loss per cycle, or the amount of deformation that is non-recoverable), but the filled Surlyn™ 1702 film is again somewhat similar.

TABLE II

| Hysteresis of Films Effect of Composition and Film Thickness | | |
|---|---|---|
| Example | 5% Hysteresis (MJ/m$^3$) | 25% Hysteresis (MJ/m$^3$) |
| 3 | 0.036 ± 0.008 | 1.016 ± 0.134 |
| 4 | 0.039 ± 0.005 | 0.905 ± 0.052 |
| 5 | 0.029 ± 0.005 | 0.893 ± 0.066 |
| 6 | 0.048 ± 0.004 | 0.910 ± 0.126 |
| Comparative B | 0.003 | 0.635 |
| Comparative A | 0.142 ± 0.019 | 1.768 ± 0.174 |

Comparative Example B exhibits low hysteresis, attributed to a lack of filler in this sample. Unfilled ionomeric films thus are not very conformable.

In Table III, the mechanical properties of several vinyl-like films are compared. From the Table, films of the present invention are roughly twice as flexible as the PVC film of Comparative Example A, based on the modulus values. The tensile strength at yield is equivalent for both films, while the resistance to tear is significantly greater for the inventive films. Tear resistance relates to the ability of the film to be die-cut without further tearing at sharp corners.

Shrinkage of films is determined by following ASTM D 702-81 test, except that the temperature used was 66°C.

The PVC film of Comparative Example A has about 2.5% machine direction shrinkage, compared with generally less than 1% machine direction shrinkage for the inventive films. This again demonstrates the greater mechanical stability of the ionomeric resin materials.

TABLE III

| Mechanical Properties of Films | | | | | | | |
|---|---|---|---|---|---|---|---|
| Sample | Tensile Modulus | MD Tensile lbs. | CD Tensile lbs. | MD Tear gms. | CD Tear gms. | MD Shrink % | CD Shrink % |
| Example 8 | 26072 | 9.9 | 9.9 | 99.3 | 1600 | 0.505 | 0.082 |
| Example 9 | - | 12.1 | 10.7 | 21 | - | - | - |
| Example 11 | 20000 | 8.1 | 8.2 | 560 | 864 | 0.38 | 1 |
| Example 12 | 30872 | 13.6 | 13.1 | 51 | 67 | 1.18 | 0.1 |
| Example 15 | 28314 | 10.9 | 10.3 | 51.4 | 72 | - | - |
| Example 13 | 17293 | 7.9 | 6.6 | 88.4 | 720 | 1.91 | 0.045 |
| Example 14 | 9353 | 5.8 | 5.6 | 47 | 51 | 0.241 | 1.2 |
| Comparative Example A | 49000 | 8.8 | 8.6 | 180 | 255 | 2.5 | 1 |

## Application of Ionomeric Resin Films as Wall Decoration.

The films of Example 1 and Comparative Example A were coated (335 mg/200 cm$^2$) with an adhesive comprising 75% (by weight) hollow microsphere adhesive (HMSA) in a binder of 25% Rohm & Haas N-1031 acrylic pressure sensitive latex adhesive. Sample strips approximately 2.4 meters long by 152-203 mm wide were cut from the films and adhered to a variety of textured wallboard surfaces painted with either Glidden Flat acrylic latex paint or Sears Semi-Gloss acrylic latex paint (both white paints). The sample strips were applied with hand pressure using a soft cloth or towel. The samples were tested in both hot (41°C) and cold 10°C) test chambers, as well as in a continuous testing facility kept at 29°C. Both films adhered well to smooth-textured flat and semi-gloss painted surfaces. However, Comparative Example A failed repeatedly when applied to a semi-gloss painted surface bearing any texture. Conversely, Example 1 performs very well on semi-gloss-painted textured surfaces. Also, the inventive material has better conformance on flat-painted surfaces.

The appliques 10 may be pre-cut into the shape of one or more scenic features such as trees, cars, aircraft, animals, personages, etc. On the side of the appliques 10 opposite the adhesive 14, there may be present indicia or a decorative image. Preferably, the decorative imagery may be applied to the applique by any suitable process, including but not limited to, etching, embossing, flexographic printing, silk screening or gravure processes.

The decorative nature of an applique 10 can be enhanced by overlapping additional appliques thereon to provide details of the scenic feature to be depicted. For example, the dolphin shown in FIG. 1 can be an additional applique which is attached onto another dolphin to represent a pair of dolphins. Details can also be pre-printed onto the appliques 10.

The versatility of the wall decorating system is greatly enhanced because appliques are provided for representing components or details of larger scenic features. A composite scenic feature is then created by positioning constituent component appliques 10 in adjacent or overlapping positions. For example, in FIG. 1, a dolphin, walrus, whale 16, sea turtle and shark can all be component appliques that combine with a sea backing sheet 12 to cooperatively define a seascape. These appliques 10 can advantageously be interchanged with other component appliques, thereby increasing the variety of decorative features which may be depicted using the present invention. The opportunity to build a detailed, decorative image using a plurality of complementary appliques provides an appealing, mess-free creative outlet for a young child.

The self-adherent appliques 10 conveniently press onto the backing sheets 12 to create a decorative wall scene, such as that shown in FIG. 1. The decorative scene can subsequently be changed by peeling off the appliques and repositioning them on or adjacent the backing sheets 12. The flexible nature of the appliques 10 allows them to be placed in overlapping relation with the backing sheet 12 as well as a wall 32 and/or an adjacent applique 10. The appliques 10 can be adhered to other surfaces of a room such as, but not limited to, furniture, doors, and windows so that the versatile wall decorating system is not limited to applique placement on the backing sheets 12.

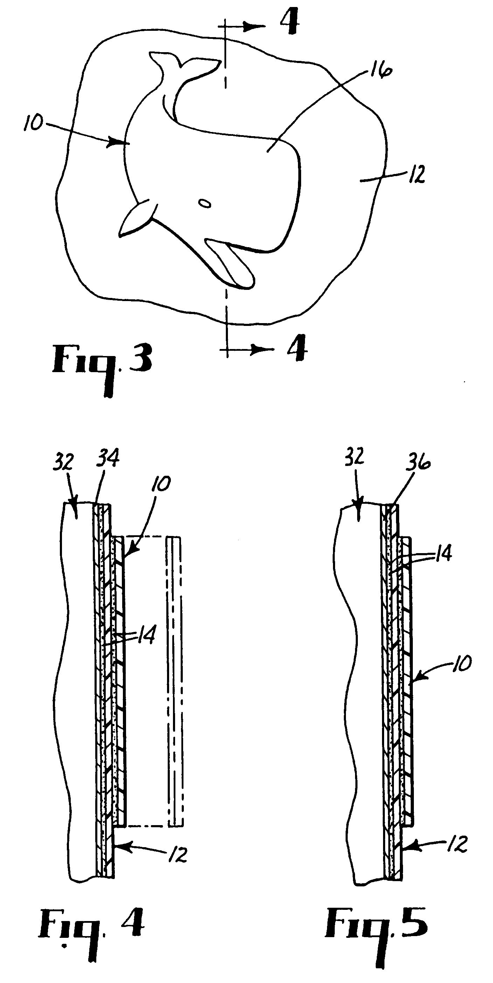

The backing sheets 12 form a border or "backing" which provides a background for a basic theme. Each backing sheet 12 has a repositionable, pressure sensitive adhesive coating 14 (FIG. 2) on at least a portion of one side. The adhesive coating 14 allows the backing sheet to be easily and quickly pressed on and peeled off of the wall 32 without marring the wall surface. The adhesive coating 14 permits the backing sheet 12 to effectively cling to an underlying layer of paint 34 (FIG. 4) or wallpaper 36 (FIG. 5) in a detachable, non-damaging manner.

Preferably, a plurality of the backing sheets 12 are used in decorating a room. Generally, as an example not intended to be limiting, the backing sheets 12 may have a length of approximately 4.57 m (15 feet), a width of about 22.8 cms (9 inches) and a thickness of between approximately 0.050 and 0.127 mm. Alternatively, the backing sheets may have a length of approximately 3.66 m (12 feet), a width of about 19 cms (7½ inches), and a thickness of between approximately 0.050 and 0.127 mm. These backing sheets 12 can be placed end-to-end to form a continuous border on all walls 32 of a room, as illustrated in FIG. 1. To achieve a continuous border, adjacent backing sheets 12 are abutted in corners of the room. The backing sheets 12 are preferably installed about 0.91 m to 1.52 m (3 to 5 feet) above floor level. When the wall decorating system is used in a small child's room, the backing sheets 12 should be affixed onto the walls 32 at a height enabling the child to reach and rearrange the decorative scene displayed thereon by the appliques 10.

The backing sheets 12 include decorative imagery or indicia on the side opposite the adhesive coating 14. Preferably, the decorative imagery provides a background pattern having a theme which complements a set of thematic appliques included with the wall decorating system. The decorative imagery or indicia may be applied to the backing sheet by any suitable process, including but not limited to, etching, embossing, flexographic printing, silk screening or gravure processes.

The background pattern and the appliques cooperatively define a decorative wall scene. The background pattern can show, for example, roads, railroad tracks, clouds, beach scenery, moon crater, etc. Alternatively, the backing sheets 12 can be a solid color free of decorative imagery, in which case the imagery of the decorative wall scene is provided solely by the appliques 10. Also alternatively, the backing sheets 12 can be transparent, in which case the imagery of the decorative wall scene may be self-applied or may be provided solely by the appliques 10.

Complementary applique sets and backing sheets are provided with themes that are age and gender oriented for use in children's rooms. Exemplary themes include spacecraft, sports, airplanes, space, dinosaurs, and transportation. The improved decorating system provides an effective way to decorate other rooms of a house as well by utilizing thematic appliques relating to, for example, various holidays or to the four seasons.

The present invention has now been described with reference to several embodiments thereof. It will be apparent to those skilled in the art that many changes can be made in the embodiment described without departing from the scope of the present invention. Thus the scope of the present invention should not be limited to the structure described in this application, but only by structures described by the language of the claims and the equivalents of those structures.

## Claims

1. An improved wall decorating system comprising:

    a backing sheet (12) having first and second sides with a portion of the first side coated with an adhesive (14) and with the second side adapted to receive indicia;

    an applique (10) having first and second sides with a portion of the first side coated with an adhesive (14) and with the second side adapted to receive indicia;

wherein the applique (10) comprises a flexible and conformable film (6) comprising:

(a) about 60-98% by weight ionomer resin that is a copolymer of ethylene and acrylic acid or methacrylic acid neutralized by a metal cation, said resin having a melt flow index greater than about 10 and
(b) about 2-40% by weight of a filler material that is not a ionomeric polymer, wherein said film (6) has a thickness of between 0.050 and 0.127 mm, and

wherein said film is substantially free of migrating plasticizers or leachable additives and wherein said film has an Elmendorf tear strength in excess of 280 grams/ply.

2. An improved wall decorating system according to claim 1, wherein said ionomeric resin is a copolymer of ethylene and methacrylic acid.

3. An improved wall decorating system according to any preceding claim, wherein said metal cation is selected from the group consisting of zinc, magnesium and sodium.

4. An improved wall decorating system according to any preceding claim, wherein said metal cation is zinc.

5. An improved wall decorating system according to any preceding claim, wherein said ionomer resin has a melt flow index of at least about 12.

6. An improved wall decorating system according to any preceding claim, wherein said film (6) comprises between about 5 and 15% by weight of filler material.

7. An improved wall decorating system according to any preceding claim, wherein said filler material comprises a pigment.

8. An improved wall decorating system according to any one of preceding claims 1-6, wherein said filler material comprises a polymer selected from the group consisting of low density polyethylene polymers, high density polyethylene polymers, polypropylene polymers, polyoxyethylene copolymers and polypropylene/ethylene copolymers.

9. An improved wall decorating system according to any preceding claim, wherein said film (6) is about 0.064 to 0.102 mm thick.

10. An improved wall decorating system according to any preceding claim, wherein said film (6) is about 0.076 to 0.089 mm thick.

11. An improved wall decorating system according to any preceding claim, wherein said adhesive (14) is a repositionable pressure-sensitive adhesive for repositionably adhering said film (6) to a surface.

12. An improved wall decorating system according to claim 11, wherein said adhesive (14) comprises

(a) between about 60-100% by weight of hollow, polymeric, acrylate, inherently tacky, infusible, solvent-insoluble, solvent-dispersible, elastomeric pressure-sensitive adhesive microspheres having a diameter of at least 1 micrometer, and
(b) between about 0-40% by weight of a non-spherical polyacrylate adhesive.

13. An improved wall decorating system according to claim 12, wherein said non-spherical polyacrylate adhesive is a copolymer of butyl acrylate and acrylonitrile.

14. An improved wall decorating system according to any one of preceding claims 12-13, wherein said non-spherical polyacrylate adhesive is present in the repositionable adhesive at an amount of about 10-35% by weight.

15. An improved wall decorating system according to any preceding claim, wherein said film (6) exhibits a Long-Term Elastic Recovery of no more than 20% after 40 hours when 0.1 mm thick and initially held for 10 minutes.

16. An improved wall decorating system according to any preceding claim, wherein said film (6) has a machine direction Elmendorf tear strength of greater than 300 g/ply when 0.076 mm thick.

17. An improved wall decorating system comprising:

a backing sheet (12) having first and second sides with a portion of the first side coated with an adhesive (14) and with the second side adapted to receive indicia;

an applique (10) having first and second sides with a portion of the first side coated with an adhesive (14) and with the second side adapted to receive indicia;

wherein the backing sheet (12) comprises a flexible and conformable film (6) comprising:

(a) about 60-98% by weight ionomer resin that is a copolymer of ethylene and acrylic acid or methacrylic acid neutralized by a metal cation, said resin having a melt flow index greater than about 10 and

(b) about 2-40% by weight of a filler material that is not an ionomeric polymer, wherein said film (6) has a thickness of between 0.050 and 0.127 mm, and

wherein said film (6) is substantially free of migrating plasticizers or leachable additives and wherein said film (6) has an Elmendorf tear strength in excess of 280 grams/ply.

18. An improved wall decorating system according to claim 17, wherein said ionomeric resin is a copolymer of ethylene and methacrylic acid.

19. An improved wall decorating system according to any one of preceding claims 17-18, wherein said metal cation is selected from the group consisting of zinc, magnesium and sodium.

20. An improved wall decorating system according to any one of preceding claims 17-19, wherein said metal cation is zinc.

21. An improved wall decorating system according to any one of preceding claims 17-20, wherein said ionomer resin has a melt flow index of at least about 12.

22. An improved wall decorating system according to any one of preceding claims 17-21, wherein said film (6) comprises between about 5 and 15% by weight of filler material.

23. An improved wall decorating system according to any one of preceding claims 17-22, wherein said filler material comprises a pigment.

24. An improved wall decorating system according to any one of preceding claims 17-22, wherein said filler material comprises a polymer selected from the group consisting of low density polyethylene polymers, high density polyethylene polymers, polypropylene polymers, polyoxyethylene copolymers and polypropylene/ethylene copolymers.

25. An improved wall decorating system according to any one of preceding claims 17-24, wherein said film (6) is about 0.064 to 0.102 mm thick.

26. An improved wall decorating system according to any one of preceding claims 17-25, wherein said film (6) is about 0.076 to 0.089 mm thick.

27. An improved wall decorating system according to any one of preceding claims 17-26, wherein said adhesive (14) is a repositionable pressure-sensitive adhesive for repositionably adhering said film (6) to a surface.

28. An improved wall decorating system according to any one of preceding claims 17-27, wherein said adhesive comprises

(a) between about 60-100% by weight of hollow, polymeric, acrylate, inherently tacky, infusible, solvent-insoluble, solvent-dispersible, elastomeric pressure-sensitive adhesive microspheres having a diameter of at least 1 micrometer, and

(b) between about 0-40% by weight of a non-spherical polyacrylate adhesive.

29. An improved wall decorating system according to claim 28, wherein said non-spherical polyacrylate adhesive is a copolymer of butyl acrylate and acrylonitrile.

30. An improved wall decorating system according to any one of preceding claims 28-29, wherein said non-spherical polyacrylate adhesive is present in the repositionable adhesive at an amount of about 10-35% by weight.

**31.** An improved wall decorating system according to any one of preceding claims 17-30, wherein said film (6) exhibits a Long-Term Elastic Recovery of no more than 20% after 40 hours when 0.1 mm thick and initially held for 10 minutes.

**32.** An improved wall decorating system according to any one of preceding claims 17-31, wherein said film (6) has a machine direction Elmendorf tear strength of greater than 300 g/ply when 0.076 mm thick.

**33.** A flexible and conformable film (6) comprising:

(a) about 60-98% by weight ionomer resin that is a copolymer of ethylene and acrylic acid or methacrylic acid neutralized by a metal cation, said resin having a melt flow index greater than about 10 and
(b) about 2-40% by weight of a filler material that is not a ionomeric polymer, wherein said film (6) has a thickness of between 0.050 and 0.127 mm,

wherein said film (6) is substantially free of migrating plasticizers or leachable additives and wherein said film (6) has an Elmdorf tear strength in excess of 280 grams/ply.

**34.** The film (6) of claim 33, wherein said ionomeric resin is a copolymer of ethylene and methacrylic acid.

**35.** The film (6) of any one of preceding claims 33-34, wherein said metal cation is selected from the group consisting of zinc, magnesium and sodium.

**36.** The film (6) of any one of preceding claims 33-35, wherein said metal cation is zinc.

**37.** The film (6) of any one of preceding claims 33-36, wherein said ionomer resin is a copolymer of ethylene with methacrylic acid that has been neutralized with zinc.

**38.** The film (6) of any one of preceding claims 33-37, wherein said ionomer resin has a melt flow index of at least about 12.

**39.** The film (6) of any one of preceding claims 33-38, wherein said film (6) comprises between about 5 and 25% by weight of filler material.

**40.** The film (6) of any one of preceding claims 33-39, wherein said film (6) comprises between about 5 and 15% by weight of filler material.

**41.** The film (6) of any one of preceding claims 33-40, wherein said filler material comprises a pigment.

**42.** The film (6) of any one of preceding claims 33-40, wherein said filler material comprises a polymer selected from the group consisting of low density polyethylene polymers, high density polyethylene polymers, polypropylene polymers, polyoxyethylene copolymers and polypropylene/ethylene copolymers.

**43.** The film (6) of any one of preceding claims 33-40, wherein said filler material comprises a synthetic wax.

**44.** The film (6) of any one of preceding claims 33-43, wherein said film (6) is about 0.064 to 0.102 mm thick.

**45.** The film (6) of any one of preceding claims 33-44, wherein said film is about 0.076 to 0.089 mm thick.

**46.** The film (6) of any one of preceding claims 33-45, further comprising a layer of adhesive on one side of said film.

**47.** The film (6) of claim 46, wherein said adhesive is a pressure-sensitive adhesive for permanently adhering said film (6) to a substrate.

**48.** The film (6) of claim 46, wherein said adhesive is a pressure-sensitive adhesive for repositionably adhering said film (6) to a substrate.

**49.** The film (6) of claim 48, wherein said adhesive comprises

(a) between about 60-100% by weight of hollow, polymeric, acrylate, inherently tacky, infusible, solvent-insoluble, solvent-dispersible, elastomeric pressure-sensitive adhesive microspheres having a diameter of at least 1 micrometer, and

(b) between about 0-40% by weight of a non-spherical polyacrylate adhesive.

50. The film (6) of claim 49, wherein said non-spherical polyacrylate adhesive is a copolymer of butyl acrylate and acrylonitrile.

51. The film (6) of any one of preceding claims 49-50, wherein said non-spherical polyacrylate adhesive is present in the repositionable adhesive at an amount of about 10-35% by weight.

52. The film (6) of any one of preceding claims 33-51, wherein said film (6) exhibits a Long-Term Elastic Recovery of no more than 20% after 40 hours when 0.1 mm thick and initially held for 10 minutes.

53. The film (6) of any one of preceding claims 33-52, wherein said film (6) has a hysteresis value of more than 0.01 $(MJ/m^3)$ under the 5% hysteresis test.

54. The film (6) of any one of preceding claims 33-53, wherein said film (6) has a machine direction Elmendorf tear strength of greater than 300 g/ply when 0.076 mm thick.

**Patentansprüche**

1. Verbessertes Wand-Dekorsystem, umfassend:
    eine flächige Unterlage (12), die erste und zweite Seiten mit einem Abschnitt auf der ersten Seite aufweist, der mit einem Klebstoff (14) beschichtet ist, und mit der zweiten Seite zum Aufnehmen von Zeichen;
    eine Applikation (10) mit ersten und zweiten Seiten mit einem Abschnitt auf der ersten Seite, die mit einem Klebstoff (14) beschichtet ist, und mit der zweiten Seite zum Aufnehmen von Zeichen;
    worin die Applikation (10) eine flexible und anpaßbare Folie (6) umfaßt, umfassend:

    (a) etwa 60 % ... 98 Gewichtsprozent Ionomerharz, welches ein Copolymer von Ethylen und Acrylsäure oder Methacrylsäure ist, die mit einem Metallkation neutralisiert ist, welches Harz einen Schmelzindex größer als etwa 10 hat; sowie
    (b) etwa 2 % ... 40 Gewichtsprozent eines Füllstoffes, der kein ionomeres Polymer ist, wobei die Folie (6) eine Dicke zwischen 0,050 und 0,127 mm aufweist; und
    worin die Folie weitgehend frei ist von wandernden Weichmachern oder herauslösbaren Additiven und worin die Folie eine Weiterreißfestigkeit nach Elmendorf von mehr als 280 g/Lage aufweist.

2. Verbessertes Wand-Dekorsystem nach Anspruch 1, bei welchem das Ionomerharz ein Copolymer von Ethylen und Methacrylsäure ist.

3. Verbessertes Wand-Dekorsystem nach einem der vorgenannten Ansprüche, bei welchem das Metallkation ausgewählt wird aus der Gruppe, bestehend aus Zink, Magnesium und Natrium.

4. Verbessertes Wand-Dekorsystem nach einem der vorgenannten Ansprüche, bei welchem das Metallkation Zink ist.

5. Verbessertes Wand-Dekorsystem nach einem der vorgenannten Ansprüche, bei welchem das Ionomerharz einen Schmelzindex von mindestens etwa 12 hat.

6. Verbessertes Wand-Dekorsystem nach einem der vorgenannten Ansprüche, bei welchem die Folie (6) zwischen 5 % und 15 Gewichtsprozent Füllstoff aufweist.

7. Verbessertes Wand-Dekorsystem nach einem der vorgenannten Ansprüche, bei welchem der Füllstoff ein Pigment aufweist.

8. Verbessertes Wand-Dekorsystem nach einem der vorgenannten Ansprüche 1 bis 6, bei welchem der Füllstoff ein Polymer aufweist, ausgewählt aus der Gruppe, bestehend aus Polyethylen-Polymeren mit niedriger Dichte, Polyethylen-Polymeren hoher Dichte, Polypropylen-Polymeren, Polyoxyethylen-Copolymeren und Polypropylen/Ethylen-Copolymeren.

9. Verbessertes Wand-Dekorsystem nach einem der vorgenannten Ansprüche, bei welchem die Folie (6) etwa 0,064 ... 0,102 mm dick ist.

10. Verbessertes Wand-Dekorsystem nach einem der vorgenannten Ansprüche, bei welchem die Folie (6) etwa 0,076 ... 0,089 mm dick ist.

11. Verbessertes Wand-Dekorsystem nach einem der vorgenannten Ansprüche, bei welchem der Klebstoff (14) ein repositionierbarer Haftklebstoff für das repositionierbare Aufkleben der Folie (6) auf eine Oberfläche ist.

12. Verbessertes Wand-Dekorsystem nach Anspruch 11, bei welchem der Klebstoff (14) umfaßt:

(a) zwischen etwa 60 % ... 100 Gewichtsprozent hohle, polymere, elastomere Acrylat-Haftklebstoff-Mikrokügelchen, die selbstklebend, unschmelzbar, lösemittelunlöslich, lösemitteldispergierbar sind und einen Durchmesser von mindestens 1 Mikrometer aufweisen; sowie
(b) zwischen etwa 0 % ... 40 Gewichtsprozent eines nichtkugelförmigen Polyacrylat-Klebstoffes.

13. Verbessertes Wand-Dekorsystem nach Anspruch 12, bei welchem der nichtkugelförmige Polyacrylat-Klebstoff ein Copolymer von Butylacrylat und Acrylnitril ist.

14. Verbessertes Wand-Dekorsystem nach einem der vorgenannten Ansprüche 12 und 13, bei welchem der nichtkugelförmige Polyacrylat-Klebstoff in dem repositionierbaren Klebstoff in einer Menge von etwa 10 % ... 35 Gewichtsprozent vorliegt.

15. Verbessertes Wand-Dekorsystem nach einem der vorgenannten Ansprüche, bei welchem die Folie (6) eine "Elastische Langzeiterholung" von nicht mehr als 20 % nach 40 Stunden bei einer Dicke von 0,1 mm und einem anfänglichen Halten für 10 Minuten zeigt.

16. Verbessertes Wand-Dekorsystem nach einem der vorgenannten Ansprüche, bei welchem die Folie (6) eine Weiterreißfestigkeit nach Elmendorf in Maschinenrichtung von mehr als 300 g/Lage bei einer Dicke von 0,076 mm aufweist.

17. Verbessertes Wand-Dekorsystem, umfassend:
eine flächige Unterlage (12), die erste und zweite Seiten mit einem Abschnitt auf der ersten Seite aufweist, der mit einem Klebstoff (14) beschichtet ist, und mit der zweiten Seite zum Aufnehmen von Zeichen;
eine Applikation (10) mit ersten und zweiten Seiten mit einem Abschnitt auf der ersten Seite, die mit einem Klebstoff (14) beschichtet ist und mit der zweiten Seite zum Aufnehmen von Zeichen;
worin die flächige Unterlage (12) eine flexible und anpaßbare Folie (6) aufweist, umfassend:

(a) etwa 60 % ... 98 Gewichtsprozent Ionomerharz, welches ein Copolymer von Ethylen und Acrylsäure oder Methacrylsäure ist, die mit einem Metallkation neutralisiert ist, welches Harz einen Schmelzindex größer als etwa 10 hat, sowie
(b) etwa 2 % ... 40 Gewichtsprozent eines Füllstoffes, der kein ionomeres Polymer ist, wobei die Folie (6) eine Dicke zwischen 0,050 und 0,127 mm aufweist; und
worin die Folie (6) weitgehend frei ist von wandernden Weichmachern oder herauslösbaren Additiven und worin die Folie (6) eine Weiterreißfestigkeit nach Elmendorf von mehr als 280 g/Lage aufweist.

18. Verbessertes Wand-Dekorsystem nach Anspruch 17, bei welchem das Ionomerharz ein Copolymer von Ethylen und Methacrylsäure ist.

19. Verbessertes Wand-Dekorsystem nach einem der vorgenannten Ansprüche 17 und 18, bei welchem das Metallkation ausgewählt wird aus der Gruppe, bestehend aus Zink, Magnesium und Natrium.

20. Verbessertes Wand-Dekorsystem nach einem der vorgenannten Ansprüche 17 bis 19, bei welchem das Metallkation Zink ist.

21. Verbessertes Wand-Dekorsystem nach einem der vorgenannten Ansprüche 17 bis 20, bei welchem das Ionomerharz einen Schmelzindex von mindestens etwa 12 hat.

22. Verbessertes Wand-Dekorsystem nach einem der vorgenannten Ansprüche 17 bis 21, bei welchem die Folie (6) zwischen etwa 5 % ... 15 Gewichtsprozent Füllstoff aufweist.

23. Verbessertes Wand-Dekorsystem nach einem der vorgenannten Ansprüche 17 bis 22, bei welchem der Füllstoff ein Pigment aufweist.

24. Verbessertes Wand-Dekorsystem nach einem der vorgenannten Ansprüche 17 bis 22, bei welchem der Füllstoff ein Polymer umfaßt, ausgewählt aus der Gruppe, bestehend aus Polyethylen-Polymeren niedriger Dichte, Polyethylen-Polymeren hoher Dichte, Polypropylen-Polymeren, Polyoxyethylen-Copolymeren und Polypropylen/Ethylen-Copolymeren.

25. Verbessertes Wand-Dekorsystem nach einem der vorgenannten Ansprüche 17 bis 24, bei welchem die Folie (6) etwa 0,064 ... 0,102 mm dick ist.

26. Verbessertes Wand-Dekorsystem nach einem der vorgenannten Ansprüche 17 bis 25, bei welchem die Folie (6) etwa 0,076 ... 0,089 mm dick ist.

27. Verbessertes Wand-Dekorsystem nach einem der vorgenannten Ansprüche 17 bis 26, bei welchem der Klebstoff (14) ein repositionierbarer Haftklebstoff für das repositionierbare Aufkleben der Folie (6) auf eine Oberfläche ist.

28. Verbessertes Wand-Dekorsystem nach einem der vorgenannten Ansprüche 17 bis 27, bei welchem der Klebstoff umfaßt:

    (a) zwischen etwa 60 % ... 100 Gewichtsprozent hohle, polymere, elastomere Acrylat-Haftklebstoff-Mikrokügelchen, die selbstklebend, unschmelzbar, lösemittelunlöslich, lösemitteldispergierbar sind und einen Durchmesser von mindestens 1 Mikrometer aufweisen; sowie
    (b) zwischen etwa 0 % ... 40 Gewichtsprozent eines nichtkugelförmigen Polyacrylat-Klebstoffes.

29. Verbessertes Wand-Dekorsystem nach Anspruch 28, bei welchem der nichtkugelförmige Polyacrylat-Klebstoff ein Copolymer von Butylacrylat und Acrylnitril ist.

30. Verbessertes Wand-Dekorsystem nach einem der vorgenannten Ansprüche 28 und 29, bei welchem der nichtkugelförmige Polyacrylat-Klebstoff in dem repositionierbaren Klebstoff in einer Menge von etwa 10 % ... 35 Gewichtsprozent vorliegt.

31. Verbessertes Wand-Dekorsystem nach einem der vorgenannten Ansprüche 17 bis 30, bei welchem die Folie (6) eine Elastische Langzeiterholung von nicht mehr als 20 % nach 40 Stunden bei einer Dicke von 0,1 mm und einem anfänglichen Halten für 10 Minuten zeigt.

32. Verbessertes Wand-Dekorsystem nach einem der vorgenannten Ansprüche 17 bis 31, bei welchem die Folie (6) eine Weiterreißfestigkeit nach Elmendorf in Maschinenrichtung von mehr als 300 g/Lage bei einer Dicke von 0,076 mm aufweist.

33. Flexible und anpaßbare Folie (6), umfassend:

    (a) etwa 60 % ... 98 Gewichtsprozent Ionomerharz, welches ein Copolymer von Ethylen und Acrylsäure oder Methacrylsäure ist, die mit einem Metallkation neutralisiert ist, welches Harz einen Schmelzindex größer als etwa 10 hat, sowie
    (b) etwa 2 % ... 40 Gewichtsprozent eines Füllstoffes, der kein ionomeres Polymer ist, wobei die Folie (6) eine Dicke zwischen 0,050 und 0,127 mm aufweist; und
    worin die Folie (6) weitgehend frei ist von wandernden Weichmachern oder herauslösbaren Additiven und worin die Folie (6) eine Weiterreißfestigkeit nach Elmendorf von mehr als 280 g/Lage aufweist.

34. Folie (6) nach Anspruch 33, bei welcher das Ionomerharz ein Copolymer von Ethylen und Methacrylsäure ist.

35. Folie (6) nach einem der vorgenannten Ansprüche 33 und 34, bei welcher das Metallkation ausgewählt wird aus der Gruppe, bestehend aus Zink, Magnesium und Natrium.

36. Folie (6) nach einem der vorgenannten Ansprüche 33 bis 35, bei welcher das Metallkation Zink ist.

**37.** Folie (6) nach einem der vorgenannten Ansprüche 33 bis 36, bei welcher das Ionomerharz ein Copolymer von Ethylen und Methacrylsäure ist, die mit Zink neutralisiert wurde.

**38.** Folie (6) nach einem der vorgenannten Ansprüche 33 bis 37, bei welcher das Ionomerharz einen Schmelzindex von mindestens etwa 12 hat.

**39.** Folie (6) nach einem der vorgenannten Ansprüche 33 bis 38, bei welcher die Folie (6) zwischen etwa 5 % ... 25 Gewichtsprozent Füllstoff aufweist.

**40.** Folie (6) nach einem der vorgenannten Ansprüche 33 bis 39, bei welcher die Folie (6) zwischen etwa 5 % ... 15 Gewichtsprozent Füllstoff aufweist.

**41.** Folie (6) nach einem der vorgenannten Ansprüche 33 bis 40, bei welcher der Füllstoff ein Pigment aufweist.

**42.** Folie (6) nach einem der vorgenannten Ansprüche 33 bis 40, bei welcher der Füllstoff umfaßt: ein Polymer, ausgewählt aus der Gruppe, bestehend aus Polyethylen-Polymeren niedriger Dichte, Polyethylen-Polymeren hoher Dichte, Polypropylen-Polymeren, Polyoxyethylen-Copolymeren und Polypropylen/Ethylen-Copolymeren.

**43.** Folie (6) nach einem der vorgenannten Ansprüche 33 bis 40, bei welcher der Füllstoff ein synthetisches Wachs aufweist.

**44.** Folie (6) nach einem der vorgenannten Ansprüche 33 bis 43, bei welcher die Folie (6) etwa 0,064 ... 0,102 mm dick ist.

**45.** Folie (6) nach einem der vorgenannten Ansprüche 33 bis 44, bei welcher die Folie etwa 0,076 ... 0,089 mm dick ist.

**46.** Folie (6) nach einem der vorgenannten Ansprüche 33 bis 45, ferner umfassend eine Klebstoffschicht auf einer der Seiten der Folie.

**47.** Folie (6) nach Anspruch 46, bei welcher der Klebstoff ein Haftklebstoff für das dauerhafte Aufkleben der Folie (6) auf ein Substrat ist.

**48.** Folie (6) nach Anspruch 46, bei welcher der Klebstoff ein Haftklebstoff zum repositionierbaren Aufkleben der Folie (6) auf ein Substrat ist.

**49.** Folie (6) nach Anspruch 48, bei welcher der Klebstoff umfaßt:

(a) zwischen etwa 60 % ... 100 Gewichtsprozent hohle, polymere, elastomere Acrylat-Haftklebstoff-Mikrokügelchen, die selbstklebend, unschmelzbar, lösemittelunlöslich, lösemitteldispergierbar sind und einen Durchmesser von mindestens 1 Mikrometer aufweisen; sowie
(b) zwischen etwa 0 % ... 40 Gewichtsprozent eines nichtkugelförmigen Polyacrylat-Klebstoffes.

**50.** Folie (6) nach Anspruch 49, bei welcher der nichtkugelförmige Polyacrylat-Klebstoff ein Copolymer von Butylacrylat und Acrylnitril ist.

**51.** Folie (6) nach einem der vorgenannten Ansprüche 49 und 50, bei welcher der nichtkugelförmige Polyacrylat-Klebstoff in dem repositionierbaren Klebstoff in einer Menge von etwa 10 % ... 35 Gewichtsprozent vorliegt.

**52.** Folie (6) nach einem der vorgenannten Ansprüche 33 bis 51, bei welcher die Folie (6) eine Elastische Langzeiterholung von nicht mehr als 20 % nach 40 Stunden bei einer Dicke von 0,1 mm und einem anfänglichen Halten für 10 Minuten zeigt.

**53.** Folie (6) nach einem der vorgenannten Ansprüche 33 bis 52, bei welcher die Folie (6) einen Hysteresewert von mehr als 0,01 (mJ/m$^3$) unter den 5 %-Hysterese-Versuch hat.

**54.** Folie (6) nach einem der vorgenannten Ansprüche 33 bis 53, bei welcher die Folie (6) eine Weiterreißfestigkeit nach Elmendorf in Maschinenrichtung von mehr als 300 g/Lage bei einer Dicke von 0,076 mm hat.

**Revendications**

1.  Système décoratif mural amélioré comprenant :

    une feuille de support (12) comportant une première et une seconde face avec une partie de la première face revêtue d'un adhésif (14) et la seconde face adaptée pour recevoir des signes distinctifs;

    une applique (10) comportant une première et une seconde face avec une partie de la première face revêtue d'un adhésif (14) et la seconde face adaptée pour recevoir des signes distinctifs; dans lequel l'applique (10) comprend un film (6) flexible et conformable comprenant :

    (a) environ 60-98 % en poids de résine ionomère qui est un copolymère d'éthylène et d'acide acrylique ou d'acide méthacrylique neutralisé par un cation métallique, cette résine ayant un indice de fluidité supérieur à environ 10 et
    (b) environ 2-40 % en poids d'une matière de charge qui n'est pas un polymère ionomère, dans lequel le film (6) précité a une épaisseur entre 0,050 et 0,127 mm, et

    dans lequel ledit film est essentiellement exempt de plastifiants migrants ou d'additifs lessivables et où ce film a une résistance au déchirement d'Elmendorf excédant 280 g/couche.

2.  Système décoratif mural amélioré suivant la revendication 1, dans lequel la résine ionomère est un copolymère d'éthylène et d'acide méthacrylique.

3.  Système décoratif mural amélioré suivant l'une ou l'autre des revendications précédentes, dans lequel le cation métallique est choisi dans le groupe comprenant le zinc, le magnésium et le sodium.

4.  Système décoratif mural amélioré suivant l'une quelconque des revendications précédentes, dans lequel le cation métallique est du zinc.

5.  Système décoratif mural amélioré suivant l'une quelconque des revendications précédentes, dans lequel la résine ionomère a un indice de fluidité d'au moins environ 12.

6.  Système décoratif mural amélioré suivant l'une quelconque des revendications précédentes, dans lequel le film (6) comprend environ entre 5 et 15 % en poids de matière de charge.

7.  Système décoratif mural amélioré suivant l'une quelconque des revendications précédentes, dans lequel la matière formant charge comprend un pigment.

8.  Système décoratif mural amélioré suivant l'une quelconque des revendications 1 à 6, dans lequel la matière formant charge comprend un polymère choisi dans le groupe comprenant les polymères de polyéthylène basse densité, les polymères de polyéthylène haute densité, les polymères de polypropylène, les copolymères de polyoxyéthylène et les copolymères de polypropylène/éthylène.

9.  Système décoratif mural amélioré suivant l'une quelconque des revendications précédentes, dans lequel le film (6) a une épaisseur d'environ 0,064 à 0,102 mm.

10. Système décoratif mural amélioré suivant l'une quelconque des revendications précédentes, dans lequel le film (6) a une épaisseur d'environ 0,076 à 0,089 mm.

11. Système décoratif mural amélioré suivant l'une quelconque des revendications précédentes, dans lequel l'adhésif (14) précité est un adhésif sensible à la pression repositionnable pour faire adhérer d'une manière repositionnable le film (6) susdit à une surface.

12. Système décoratif mural amélioré suivant la revendication 11, dans lequel l'adhésif (14) comprend :

    (a) entre environ 60-100 % en poids de microsphères d'adhésif sensible à la pression élastomère, dispersables dans les solvants, insolubles dans les solvants, infusibles, intrinsèquement collantes, d'acrylate, polymériques, creuses ayant un diamètre d'au moins 1 micromètre, et
    (b) entre environ 0-40 % en poids d'un adhésif de polyacrylate non sphérique.

**13.** Système décoratif mural amélioré suivant la revendication 12, dans lequel l'adhésif de polyacrylate non sphérique est un copolymère d'acrylate de butyle et d'acrylonitrile.

**14.** Système décoratif mural amélioré suivant l'une ou l'autre des revendications précédentes 12 et 13, dans lequel l'adhésif de polyacrylate non sphérique est présent dans l'adhésif repositionnable en une quantité d'environ 10-35 % en poids.

**15.** Système décoratif mural amélioré suivant l'une quelconque des revendications précédentes, dans lequel le film (6) précité montre une récupération élastique à long terme de pas plus de 20 % après 40 heures lorsqu'il a 0,1 mm d'épaisseur et qu'il est maintenu initialement pendant 10 minutes.

**16.** Système décoratif mural amélioré suivant l'une quelconque des revendications précédentes, dans lequel le film (6) précité a une résistance au déchirement d'Elmendorf dans la direction de la machine supérieure à 300 g/couche lorsqu'il a 0,076 mm d'épaisseur.

**17.** Système décoratif mural amélioré comprenant :

une feuille de support (12) comportant une première et une seconde face avec une partie de la première face revêtue d'un adhésif (14) et avec la seconde face adaptée pour recevoir des signes distinctifs;

une applique (10) comportant une première et une seconde face avec une partie de la première face revêtue d'un adhésif (14) et la seconde face adaptée pour recevoir des signes distinctifs; dans lequel la feuille de support (12) comprend un film (6) flexible et conformable comprenant :

(a) environ 60-98 % en poids de résine ionomère qui est un copolymère d'éthylène et d'acide acrylique ou d'acide méthacrylique neutralisé par un cation métallique, ladite résine ayant un indice de fluidité supérieur à environ 10 et

(b) environ 2-40 % en poids d'une matière de charge qui n'est pas un polymère ionomère, dans lequel le film (6) susdit a une épaisseur entre 0,050 et 0,127 mm, et

dans lequel le film (6) précité est essentiellement exempt de plastifiants migrants ou d'additifs lessivables et où ledit film (6) a une résistance au déchirement d'Elmendorf excédant 280 g/couche.

**18.** Système décoratif mural amélioré suivant la revendication 17, dans lequel la résine ionomère est un copolymère d'éthylène et d'acide méthacrylique.

**19.** Système décoratif mural amélioré suivant l'une ou l'autre des revendications précédentes 17 et 18, dans lequel le cation métallique est choisi dans le groupe comprenant le zinc, le magnésium et le sodium.

**20.** Système décoratif mural amélioré suivant l'une quelconque des revendications précédentes 17 à 19, dans lequel le cation métallique est du zinc.

**21.** Système décoratif mural amélioré suivant l'une quelconque des revendications précédentes 17 à 20, dans lequel la résine ionomère a un indice de fluidité d'au moins environ 12.

**22.** Système décoratif mural amélioré suivant l'une quelconque des revendications précédentes 17 à 21, dans lequel le film (6) précité comprend entre environ 5 et 15 % en poids de matière de charge.

**23.** Système décoratif mural amélioré suivant l'une quelconque des revendications précédentes 17 à 22, dans lequel la matière formant charge comprend un pigment.

**24.** Système décoratif mural amélioré suivant l'une quelconque des revendications précédentes 17 à 22, dans lequel la matière formant charge comprend un polymère choisi dans le groupe comprenant les polymères de polyéthylène basse densité, les polymères de polyéthylène haute densité, les polymères de polypropylène, les copolymères de polyoxyéthylène et les copolymères de polypropylène/éthylène.

**25.** Système décoratif mural amélioré suivant l'une quelconque des revendications précédentes 17 à 24, dans lequel le film (6) précité a une épaisseur d'environ 0,064 à 0,102 mm.

**26.** Système décoratif mural amélioré suivant l'une quelconque des revendications précédentes 17 à 25, dans lequel le film (6) précité a une épaisseur d'environ 0,076 à 0,089 mm.

27. Système décoratif mural amélioré suivant l'une quelconque des revendications précédentes 17 à 26, dans lequel l'adhésif (14) précité est un adhésif sensible à la pression repositionnable pour faire adhérer d'une manière repositionnable le film (6) à une surface.

28. Système décoratif mural amélioré suivant l'une quelconque des revendications précédentes 17 à 27, dans lequel l'adhésif comprend :

   (a) entre environ 60-100 % en poids de microsphères d'adhésif sensible à la pression élastomère, dispersables dans les solvants, insolubles dans les solvants, infusibles, intrinsèquement collantes, d'acrylate, polymériques, creuses ayant un diamètre d'au moins 1 micromètre, et
   (b) entre environ 0-40 % en poids d'un adhésif de polyacrylate non sphérique.

29. Système décoratif mural amélioré suivant la revendication 28, dans lequel l'adhésif de polyacrylate non sphérique est un copolymère d'acrylate de butyle et d'acrylonitrile.

30. Système décoratif mural amélioré suivant l'une ou l'autre des revendications précédentes 28 et 29, dans lequel l'adhésif de polyacrylate non sphérique est présent dans l'adhésif repositionnable en une quantité d'environ 10-35 % en poids.

31. Système décoratif mural amélioré suivant l'une quelconque des revendications précédentes 17 à 30, dans lequel le film (6) précité montre une récupération élastique à long terme de pas plus de 20 % après 40 heures lorsqu'il a 0,1 mm d'épaisseur et qu'il est maintenu initialement pendant 10 minutes.

32. Système décoratif mural amélioré suivant l'une quelconque des revendications précédentes 17 à 31, dans lequel le film (6) précité a une résistance au déchirement d'Elmendorf dans la direction de la machine supérieure à 300 g/couche lorsqu'il a 0,076 mm d'épaisseur.

33. Film (6) flexible conformable comprenant :

   (a) environ 60-98 % en poids de résine ionomère qui est un copolymère d'éthylène et d'acide acrylique ou d'acide méthacrylique neutralise par un cation métallique, ladite résine ayant un indice de fluidité supérieur à environ 10 et
   (b) environ 2-40 % en poids d'une matière de charge qui n'est pas un polymère ionomère, dans lequel ledit film (6) a une épaisseur entre 0,050 et 0,127 mm, dans lequel le film (6) précité est essentiellement exempt de plastifiants migrants ou d'additifs lessivables et où ce film (6) a une résistance au déchirement d'Elmendorf excédant 280 g/couche.

34. Film (6) suivant la revendication 33, dans lequel la résine ionomère est un copolymère d'éthylène et d'acide méthacrylique.

35. Film (6) suivant l'une ou l'autre des revendications précédentes 33 et 34, dans lequel le cation métallique est choisi dans le groupe comprenant le zinc, le magnésium et le sodium.

36. Film (6) suivant l'une quelconque des revendications précédentes 33 à 35, dans lequel le cation métallique est du zinc.

37. Film (6) suivant l'une quelconque des revendications précédentes 33 à 36, dans lequel la résine ionomère est un copolymère d'éthylène et d'acide acrylique qui a été neutralisé avec du zinc.

38. Film (6) suivant l'une quelconque des revendications précédentes 33 à 37, dans lequel la résine ionomère a un indice de fluidité d'au moins environ 12.

39. Film (6) suivant l'une quelconque des revendications précédentes 33 à 38, dans lequel ledit film (6) comprend entre environ 5 et 25 % en poids de matière de charge.

40. Film (6) suivant l'une quelconque des revendications précédentes 33 à 39, dans lequel ledit film (6) comprend entre environ 5 et 15 % en poids de matière de charge.

**41.** Film (6) suivant l'une quelconque des revendications précédentes 33 à 40, dans lequel la matière formant charge comprend un pigment.

**42.** Film (6) suivant l'une quelconque des revendications précédentes 33 à 40, dans lequel la matière formant charge comprend un polymère choisi dans le groupe comprenant les polymères de polyéthylène basse densité, les polymères de polyéthylène haute densité, les polymères de polypropylène, les copolymères de polyoxyéthylène et les copolymères de polypropylène/éthylène.

**43.** Film (6) suivant l'une quelconque des revendications précédentes 33 à 40, dans lequel la matière formant charge comprend une cire synthétique.

**44.** Film (6) suivant l'une quelconque des revendications précédentes 33 à 43, dans lequel ledit film (6) a une épaisseur d'environ 0,064 à 0,102 mm.

**45.** Film (6) suivant l'une quelconque des revendications précédentes 33 à 44, dans lequel ledit film (6) a une épaisseur d'environ 0,076 à 0,089 mm.

**46.** Film (6) suivant l'une quelconque des revendications précédentes 33 à 45, comprenant de plus une couche d'adhésif sur une face dudit film.

**47.** Film (6) suivant la revendication 46, dans lequel l'adhésif est un adhésif sensible à la pression pour faire adhérer de façon permanente ledit film (6) à un substrat.

**48.** Film (6) suivant la revendication 46, dans lequel l'adhésif est un adhésif sensible à la pression pour faire adhérer de façon repositionnable ledit film (6) à un substrat.

**49.** Film (6) suivant la revendication 48, dans lequel l'adhésif comprend :

(a) entre environ 60-100 % en poids de microsphères d'adhésif sensible à la pression élastomère, dispersables dans les solvants, insolubles dans les solvants, infusibles, intrinsèquement collantes, d'acrylate, polymériques, creuses ayant un diamètre d'au moins 1 micromètre, et
(b) entre environ 0-40 % en poids d'un adhésif de polyacrylate non sphérique.

**50.** Film (6) suivant la revendication 49, dans lequel l'adhésif de polyacrylate non sphérique est un copolymère d'acrylate de butyle et d'acrylonitrile.

**51.** Film (6) suivant l'une ou l'autre des revendications précédentes 49 et 50, dans lequel l'adhésif de polyacrylate non sphérique est présent dans l'adhésif repositionnable en une quantité d'environ 10-35 % en poids.

**52.** Film (6) suivant l'une quelconque des revendications précédentes 33 à 51, dans lequel ledit film (6) montre une récupération élastique à long terme de pas plus de 20 % après 40 heures lorsqu'il a 0,1 mm d'épaisseur et qu'il est initialement maintenu pendant 10 minutes.

**53.** Film (6) suivant l'une quelconque des revendications précédentes 33 à 52, dans lequel ledit film (6) a une valeur d'hystérésis de plus de 0,01 (MJ/m$^3$) sous l'essai d'hystérésis à 5 %.

**54.** Film (6) suivant l'une quelconque des revendications précédentes 33 à 53, dans lequel ledit film (6) a une résistance au déchirement d'Elmendorf dans la direction de la machine supérieure à 300 g/couche lorsqu'il a 0,076 mm d'épaisseur.

# Fig. 1

# Fig. 2

Fig. 3

Fig. 4

Fig. 5

**Fig. 6A**

**Fig. 6B**

PRIOR ART

**Fig. 6C**

Fig. 7

Fig. 8